Europäisches Patentamt

European Patent Office

Office européen des brevets

(11) Publication number : **0 671 311 A1**

## (12) EUROPEAN PATENT APPLICATION

(21) Application number : 95301602.9

(22) Date of filing : 10.03.95

(51) Int. Cl.⁶ : **B62D 13/04**

(30) Priority : 12.03.94 GB 9404851
08.02.95 GB 9502399

(43) Date of publication of application :
13.09.95 Bulletin 95/37

(84) Designated Contracting States :
DE ES FR GB IE IT NL

(71) Applicant : ROR ROCKWELL LIMITED
Llay Industrial Estate,
Rackery Lane
Llay, Wrexham, Clwyd LL12 0PB (GB)

(72) Inventor : Dixon, Alan Geoffrey
3 Belgrave Close
Dodleston, Chester CH4 9NU (GB)

(74) Representative : Stonehouse, Sidney William
et al
Barker, Brettell & Duncan
138 Hagley Road
Edgbaston
Birmingham B16 9PW (GB)

(54) Active steering system.

(57) An active steering system (20) is provided for a vehicle in which an associated pair of wheels which are aligned to be parallel to a longitudinal axis (10) of the vehicle for linear travel of the vehicle, are adapted to be angularly orientated when the vehicle travels a curved path so as to create a differential angle between the two wheels about the centre of curvature (14) of the path. The wheel nearer to the centre of curvature (14), the inner wheel, is orientated at a larger angle to the direction of travel of the vehicle than the other, outer wheel. The wheels are angularly orientated by motive means comprising a variety of fluid operated piston and cylinder assemblies. These have at least one piston rod connected to a mounting for a wheel and acting on the wheel to turn it in response to a steering movement of the vehicle. An adjustable connection may be provided between the piston rod and the mounting for the wheel.

Fig. 2

This invention relates to an active steering system for a vehicle particularly, though not exclusively, a trailer of an articulated vehicle.

Traditionally, the rear wheels of the trailer of an articulated vehicle have been fixed in angular orientation so as to be parallel to the longitudinal axis of the trailer. This is adequate when the trailer is being towed in a straight line but presents significant problems when the trailer is towed along a curved path, as when being towed around a corner or even manoeuvred from one lane of a roadway to another. When towed along a curved path through a front pivotal connection with a fifth wheel of a tractor, a trailer with wheels in a fixed orientation tends to pivot about the wheels as opposed to the wheels following the arc described by the tractor. This results in the frame of a trailer moving inwards towards the centre of curvature of the path. The trailer consequently cuts into the path followed by the tractor and a wider turning band to accommodate this incutting is required than if the tractor's path were to be followed. The reduction in manoeuvrability of the trailer often can make it difficult or impossible for an articulated vehicle to negotiate narrow winding roads; for example it can be difficult for articulated milk tankers to travel along some roads and lanes leading to farms from which milk is to be collected. A driver must also compensate for the inswing of the trailer when negotiating a corner to ensure that the trailer does not hit anything as it swings in at the corner.

Fixed orientation rear wheels of a trailer are also subjected to transverse drag when the trailer is following a curved path and this has further disadvantages. Extra fuel is expended by the tractor overcoming these additional undesirable forces and tyres are subjected to wear and scrub due to being dragged transversely across a road surface.

Some attempt to reduce these problems has been made by providing steering systems in which each of a pair of wheels is mounted for rotation about a king pin. When a trailer having such a steering system is towed along a curved path, the wheels turn about their respective king pins so that they are better able to follow the path of the tractor. The wheels of the pair are connected by a tie rod which causes them to turn through the same angle and the tie rod remains at all times substantially parallel to an axis intersecting the turning axes of the two wheels. When the trailer is towed in a straight line the wheels are held by the tie rod in an in-line position in which they are parallel to the trailer's longitudinal axis.

The problems of tyre wear and scrub and of the trailer cutting into an arcuate path have not been entirely alleviated by such systems which have been provided hitherto, although they have provided an improvement with respect to fixed orientation rear wheels.

It is an aim of the present invention to provide an improved active steering system.

According to the present invention an active steering system is provided for a vehicle in which an associated pair of wheels which are aligned to be parallel to a longitudinal axis of the vehicle for linear travel of the vehicle, are adapted to be angularly orientated when the vehicle travels a curved path so as to create a differential angle between the two wheels about the centre of curvature of said path such that the wheel nearer to the centre of curvature, the inner wheel, is orientated at a larger angle to the direction of travel of the vehicle than the other, outer, wheel of the pair.

Because of the differential angle between the two wheels both wheels are able to follow curved paths concentric with the path followed by the centre of the vehicle and this minimises the area of the arcuate sector through which the vehicle sweeps.

The vehicle may be caused to travel a curved path by, for example, the operation of a steered axle in the case of a rigid vehicle, or the combination of the operation of a steered axle on a tractor vehicle and the consequent rotational movement of a coupling device between the tractor vehicle and a trailer towed thereby.

Angular orientation of the pair of wheels may be caused by motive and actuating means between the wheels and a steered axle of the vehicle or between the wheels and the coupling device whereby the vehicle may be towed.

In order to accommodate the different linear distances travelled by each wheel when the vehicle follows a curved path, the outer wheel must be able to rotate at a relatively greater rotational velocity than the inner wheel. The wheels are conveniently mounted on independent axle means to allow for this. Each wheel of the pair may be rotatably mounted on a separate stub axle, each stub axle being rotatable about the axis of an associated king pin.

Each wheel may be angularly orientated from one position to another by motive force provided by a piston rod of a fluid operated piston. Where the wheel is mounted on a stub axle rotatable about a king pin, the piston rod may act on the wheel through a crank fixed to the stub axle such that rotation of the crank induces rotation of the stub axle about the king pin. The crank may also rotate about the king pin. A pivotal connection is provided between the piston rod, or an extension of the piston rod, and the crank to accommodate a change in angular orientation between the piston rod and the crank due to rotation of the crank and extension or retraction of the piston rod.

For the sake of convenience, the position of each component of the steering system now provided when the wheels are held parallel to the vehicle's axis will be referred to hereinafter as that component's "neutral position".

In one embodiment, in which each wheel of the pair is mounted on a respective stub axle carried by a king pin and is angularly orientated by means of a piston rod of a fluid operated piston, the cylinder in which the piston operates is pivotally mounted with respect to the axle. The piston rod is pivoted to one end of a crank, which is fixed at an opposite end to the stub axle. The cylinder may be mounted such that when the wheel is orientated in a neutral, in-line, position in which it is parallel to the vehicle's longitudinal axis the cylinder is positioned rearwardly of, and substantially parallel to, the stub axle. In its neutral position, the pivot between the piston rod and the crank is offset so that it does not lie on a line perpendicular to the stub axle passing through the king pin, but is nearer to the wheel. That pivot moves in a circular path centred on the axis of the king pin. However, because the pivot is offset towards the wheel, extension of the piston rod from its neutral position will cause a greater angular displacement of the crank (and hence of the wheel) from its neutral position, than the angular displacement in the opposite sense from the neutral position caused by a similar amount of retraction of the piston rod from the piston rod's neutral position. The extent of the differential angular response of the wheels with respect to a given extension and retraction of the piston rod can be selected by varying the geometry of the system.

The wheels of the pair may be arranged in this way with their associated cranks pivoted to oppositely extending piston rods of a piston operating in a double acting cylinder serving the two wheels. With this arrangement, extension of the piston rod associated with the inner wheel when the vehicle moves along a curved path causes that wheel to be turned inwardly relative to the vehicle by a greater amount than the retraction, of the same magnitude, of the piston rod associated with the outer wheel causes the outer wheel to be turned outwardly relative to the vehicle. The desired differential angle between the two wheels is thus obtained. This angle is sometimes known as the Ackermann differential angle.

It will be appreciated that the same effect may be achieved by positioning the cylinder forwardly of the stub axles and offsetting the neutral positions of the pivots between the piston rods and the cranks towards the centre of the vehicle, rather than towards the wheels.

The double acting cylinder may be pivotally connected to the vehicle frame, the axle beam or to a support fixed relative to the frame, and be restrained against transverse movement with respect to the vehicle but be free to move substantially parallel to the longitudinal axis of the vehicle and pivot with respect thereto.

Instead of a double acting cylinder serving the two wheels, each wheel may have its own associated piston and cylinder, but operation of the pistons would be suitably coordinated so that as the piston rod of one piston is extended the piston rod of the other piston is correspondingly retracted to achieve the desired differential angle between the two wheels when the vehicle travels a curved path.

In a further embodiment, each stub axle is fixedly secured to an associated crank, and a tie rod is provided which is pivotally connected at one end to a remote end of one of the cranks and is pivotally connected at its other end to the remote end of the other crank. When the cranks project towards the front of the vehicle, the pivotal points between the tie rod and the cranks in a neutral position, in which each wheel is parallel to the vehicle's longitudinal axis, lie inwards towards the centre of the vehicle with respect to axes perpendicular to the stub axles passing through the respective king pins. In this way, rotation of the cranks about their associated king pins produces the desired differential angle between the two wheels. It will be understood that if the cranks project instead towards the rear of the vehicle, the pivots between the tie rods and the cranks should then be offset towards the outside of the vehicle to produce the desired differential angle between the wheels.

Where a tie rod is provided, the wheels may be actuated to rotate about their respective king pins by a single piston rod pivotally connected to one of the cranks or pivotally connected to a further crank secured to one of the stub axles. The neutral position of the pivot between the piston rod and the crank on which it acts may be offset to one side of an axis passing through the associated king pin perpendicular to the associated stub axle. In this way, as previously described, extension of the piston rod from its neutral position will cause a change in the angular orientation of the wheels of a different magnitude to the change in angular orientation induced by retraction of the piston of the same amount from its neutral position.

An adjustable connection may be provided between a piston rod and associated crank. This may be of a type known as a "turnbuckle", comprising a sleeve having oppositely internally threaded ends, one of which is engaged by a screw threaded end on the piston rod and the other of which is engaged by a screw threaded member which is pivotally carried by the crank.

More than one associated pair of wheels of the vehicle may be adapted to be angularly orientated in an active steering system in accordance with the present invention.

Embodiments of the invention will now be described, by way of example only, with reference to the accompanying drawings, in which:

Figure 1 is a schematic plan view of a trailer being towed along a curved path;

Figure 2 is a plan view of an active steering system in accordance with the invention at an axle of a trailer of an articulated vehicle;

Figure 3 shows diagrammatically components of Figure 2 in one angular orientation;

Figure 4 is a perspective view of part of the steering system of Figure 2;

Figure 5 is a plan view of an alternative active steering system in accordance with the invention at an axle of a trailer;

Figure 6 is a plan view of actuating means for use with the system of Figure 5;

Figure 7 is a plan view of a modification of the system of Figure 5; and

Figure 8 is a plan view of a modification showing an end of a cylinder from which a piston rod extends having an adjustable connection on the end thereof.

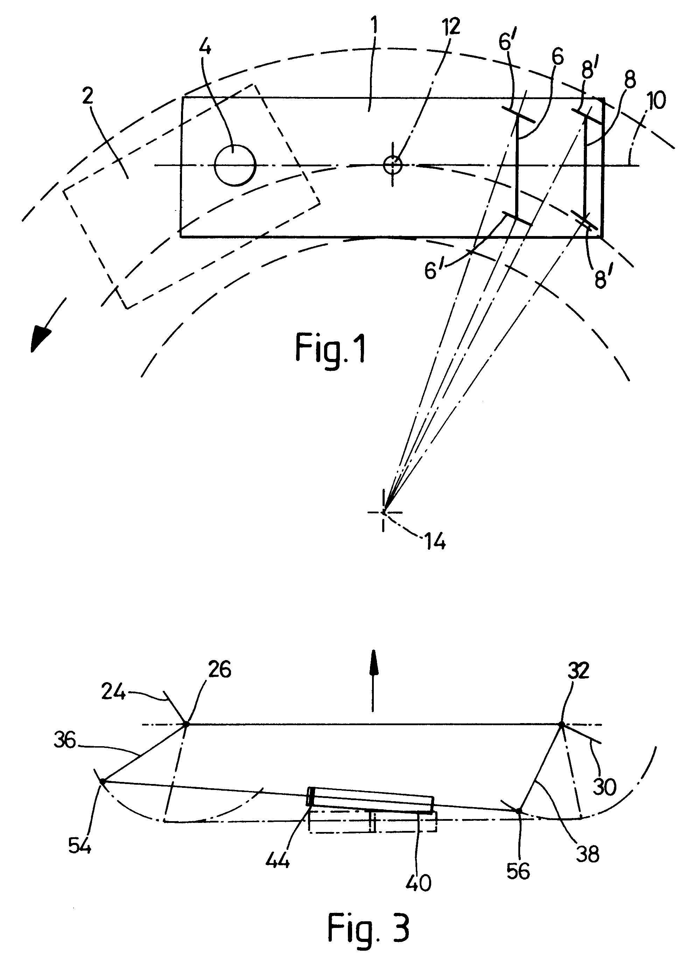

Referring to Figure 1, a trailer 1 is shown being towed along a curved path by a tractor 2 through a pivotal fifth wheel connection 4. The trailer 1 has a first rear axle 6 and a second rear axle 8, each having a pair of road wheels 6' and 8' respectively. The longitudinal axis of the trailer is indicated at 10.

When the trailer 1 is towed in a straight line each of its wheels 6',8' is held parallel to the trailer's longitudinal axis 10. When the trailer is towed along a curved path, such as shown , it sweeps through an arcuate section of space, the path of the outer corners of the trailer defining approximately the outer radius of the arcuate sector and the path of the centre of the inner side of the trailer defining approximately the inner radius of the arcuate sector. If the rear wheels of a trailer were to be fixed such that they were always held parallel to the vehicle's longitudinal axis, the trailer, when turned, would tend to pivot on its rear wheels, forcing the inner side of the trailer 1 towards the centre of curvature of the curved path to be followed, and thus increasing the area of the arcuate sector through which the trailer passes. This in-swinging of the trailer limits its manoeuvrability and leads to the disadvantages previously referred to. The area of the arcuate sector through which the trailer sweeps is, however, minimised if, as shown in Figure 1, each of its wheels 6',8' travels along a path having the same centre of curvature as the centre of the trailer, indicated at 12. This is achieved by orientating each of the wheels such that it lies at a tangent to a circle having the same centre of curvature 14 as the curved path followed by the trailer centre 12. The inner wheel of each pair must be positioned at a greater angle, relative to the longitudinal axis 10 of the trailer, than the outer wheel. This is achieved in accordance with the present invention by causing a differential angle between the two wheels of each pair when the trailer travels along a curved path.

The desired angle to be applied to each wheel 6',8' is dependant upon the geometry of the trailer and positioning of the wheel and can be calculated trigonometrically for a given curved path to be travelled.

By way of example a trailer of the following configuration will be considered:

| overall trailer length : | 8m |
|---|---|
| number of axles : | 2 |
| position of second axle : | 1m from rear end of trailer |
| position of first rear axle : | 1.36m in front of rear axle |
| distance between wheels of each pair : | 2.04m |
| position of fifth wheel pivot on trailer : | 1m from front end of trailer. |

With this configuration, when the trailer travels along a curved path each wheel will follow a curved path centred on the same centre of curvature as the path followed by the centre 12 of the trailer, if positioned with respect to the longitudinal axis of the vehicle at the following angles:

```
        inner wheel of second rear axle    :     30°

        outer wheel of second rear axle    :     22.5°

        inner wheel of first rear axle     :     17.5°

          outer wheel of first rear axle   :     12.8°.
```

Similar calculations can be made for different geometries and different numbers and positions of axles.

It can be seen from the figures given above that for each axle the outer wheel is angled for travel along the curved path at about 75% of the angle at which its associated inner wheel is presented.

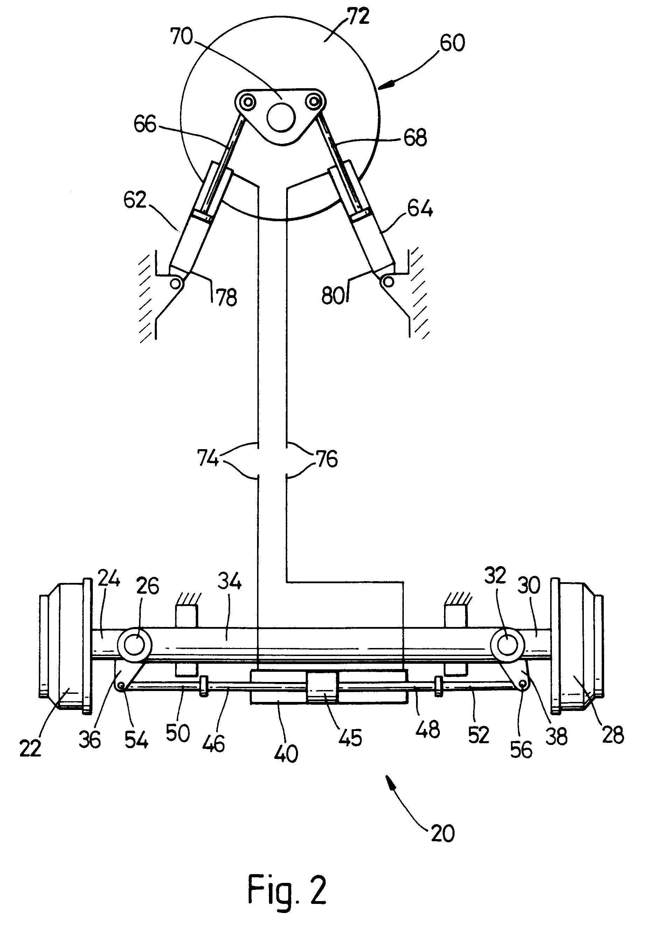

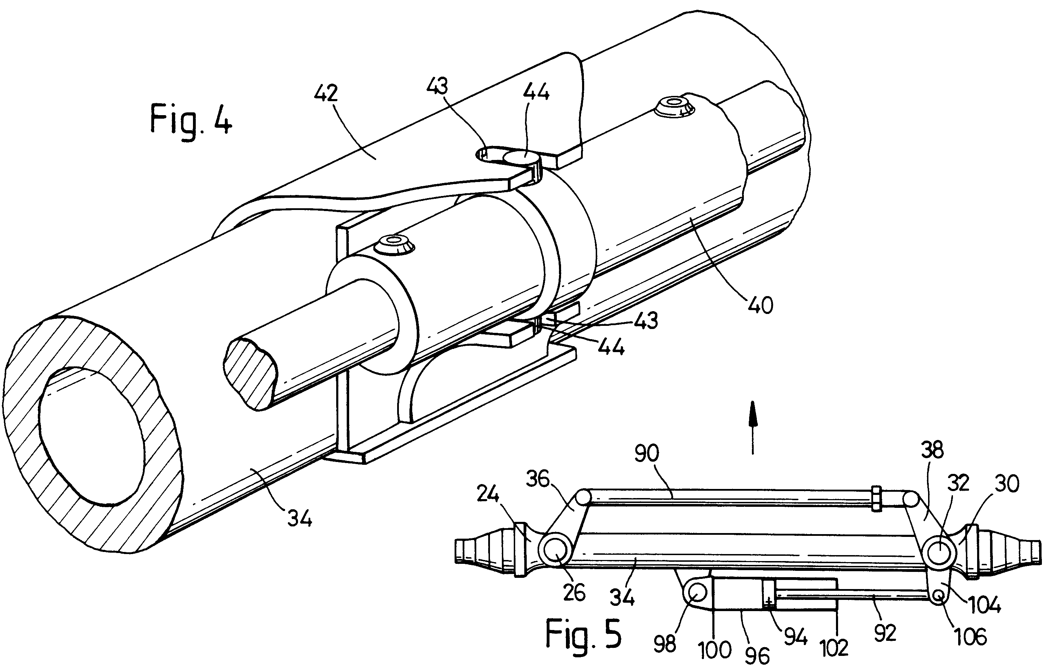

Referring now to Figures 2 and 4, an active steering system adapted to apply a differential angle across the two wheels of an axle is indicated generally at 20. The system is symmetrically arranged. A first wheel hub 22 for the pair of wheels is supported on a first stub axle 24 which is mounted to pivot about a first king pin 26. Similarly, a second wheel hub 28 of the pair of wheels is supported on a second stub axle 30 which is mounted to pivot about a second king pin 32. Each king pin 26,32 is supported relative to a frame of the trailer by an axle beam 34 connected to the vehicle frame by means of a suitable suspension system (not shown).

First and second cranks 36,38 are secured respectively to the first and second stub axles 26,30, each being mounted to pivot with its respective stub axle about the respective king pin 26,32. A double acting hydraulic cylinder 40 is pivotally attached to, but rearwards of, the axle beam 34, at the central longitudinal axis of the vehicle, by means of a bracket 42, Figure 4, providing a longitudinal slot 43 and pin 44 connection which restrains the cylinder 40 from transverse movement but permits horizontal rotation and movement in the direction of the longitudinal axis of the trailer. A piston 45, having first and second piston rods 46,48, operates in the cylinder 40 under the application of pressure fluid admitted to either side of the piston 45 by pipes 74,76. Each piston rod 46,48 is rigidly connected to an associated extension 50,52 which is, in turn, connected to an adjacent one of the cranks, 36,38 by a pivot 54,56.

As can be seen, in a neutral position, in which the wheels on the wheel hubs 22,28 are held parallel to the trailer's longitudinal axis, the pivots 54,56 between the cranks 36,38 and their respective piston rods 50,52 are offset to lie outside an axis parallel to the longitudinal axis of the vehicle passing through the respective king pins 26,32.

When the trailer is following an anticlockwise (left hand) curve travelling forwards, pressure fluid is applied in the cylinder 40 to move the piston 45 to the left, as viewed in Figure 2. Such a position is shown schematically in Figure 3, in bold lines, the neutral position of the steering system being shown in dotted lines. Each pivot 54,56 between the respective piston rod 50,52 and its crank 36,38 follows an arcuate path around the respective king pin 26,32. The distance between the pivots 54,56 remains constant. However, the offset of the pivots in their neutral position means that when the piston rods 46,48 move in one direction, to the left as shown in Figure 3, a greater angular displacement from the neutral position is caused at the first stub axle 24, which corresponds here to the stub axle at the inside of the curved path to be followed by the trailer, than at the second stub axle 30. Thus a differential angle is produced across the two wheels of the pair on the wheel hubs 22,28.

It will be understood that when, in this configuration, the trailer is to follow a clockwise curve travelling forwards, the piston 45 is caused to move to the right from its neutral position and a greater angular displacement from the neutral position is then caused at the second stub axle 30 than at the first stub axle 24. In this case, the second stub axle 30 is at the inside of the curved path to be followed by the trailer.

If desired the cylinder 40 may be positioned forwards of the axle beam 34, with the cranks 36,56 also pointing forwards, in which case the pivots 54,56 between the ends of the piston rods 46,48 and their respective cranks should then be offset toward the centre of the vehicle with respect to axes passing through the respective king pins 26,32 parallel to the vehicle's longitudinal axis 10.

Movement of the piston 45 in the double acting cylinder 40 is induced by displacement of hydraulic fluid caused by actuating means 60, Figure 2. The actuating means 60 is also symmetrically arranged. The actuating means 60 comprises a pair of hydraulic cylinders 62,64 each of which is pivotally fixed at one end to the vehicle frame. At its other end each cylinder 62,64 has a piston rod 66,68 projecting from its piston, the piston rod being pivotally connected to a bell crank 70. The bell crank 70 rotates with the fifth wheel 72 of a tractor by which the trailer is towed. When the trailer is towed, for example around a left hand curve, the bell crank 70 is rotated anticlockwise relative to the trailer causing the left-hand piston rod 66, as viewed in Figure 2, to be pushed into its cylinder 62, and the other piston rod 68 to be drawn out of its cylinder 64. This induces movement of hydraulic fluid through pipes 74,76 connecting the piston rod ends of the cylinders 62,64 of the actuating means 60 to the opposite ends of the double acting cylinder 40 at the steering system 20. Pipes 78,80 connect the pivoted ends of the cylinders 62,64 hydraulically to a double acting cylinder of another steering system at another axle (not shown) of the trailer, or to a second back-up cylinder on the same axle which may be mounted in the same sense as cylinder 40, or forward of the axle, connected to the stub axles of that axle through cranks, as, for example, cranks 36,38 of Figure 5.

The actuating means 60 is arranged to displace a substantially equal volume of hydraulic fluid for a given rotation of the fifth wheel 72 relative to the trailer, either clockwise or anticlockwise, from its neutral position. The displacement of the piston 45 in the double acting cylinder 40 of the steering system 20 is dependent upon the displacement of the actuating means 60 and the hydraulic ratio between the respective cylinders.

It will be appreciated that various other arrangements of actuating means could be employed to provide displacement of hydraulic fluid to the steering system. The geometry of the actuating means may be chosen so that the displacement of hydraulic fluid is not linearly proportional to the change in angle between the fifth wheel and the trailer.

It is not essential for the steering system and actuating means to be symmetrical, as in the foregoing embodiment.

The alternative steering system shown in Figure 5 will now be described. Parts similar to those in the embodiment just described are identified by the same reference numbers. As in the previous embodiment, first and second cranks 36,38 are attached respectively to first and second stub axles 24,30 rotatable about first and second king pins 26,32. However, in this embodiment, the cranks 36,38 project forwards of the axle beam 34. Each end of a tie rod 90, positioned forwards of the axle beam 34, is pivotally connected at its opposite ends to the first and second cranks 36,38. In a neutral position, at which the first and second stub axles 24,30 are held perpendicular to the longitudinal axis of the trailer, the pivots between the cranks 36,38 and the tie rod 90 are offset to lie towards the centre of the axle beam 34 with respect to an axis parallel to the trailer's longitudinal axis passing through the respective king pins 26,30. Rotation of one of the cranks about its respective king pin causes rotation of the other crank about its king pin so as to induce a differential angle between wheels (not shown) mounted on the first and second stub axles 24,30.

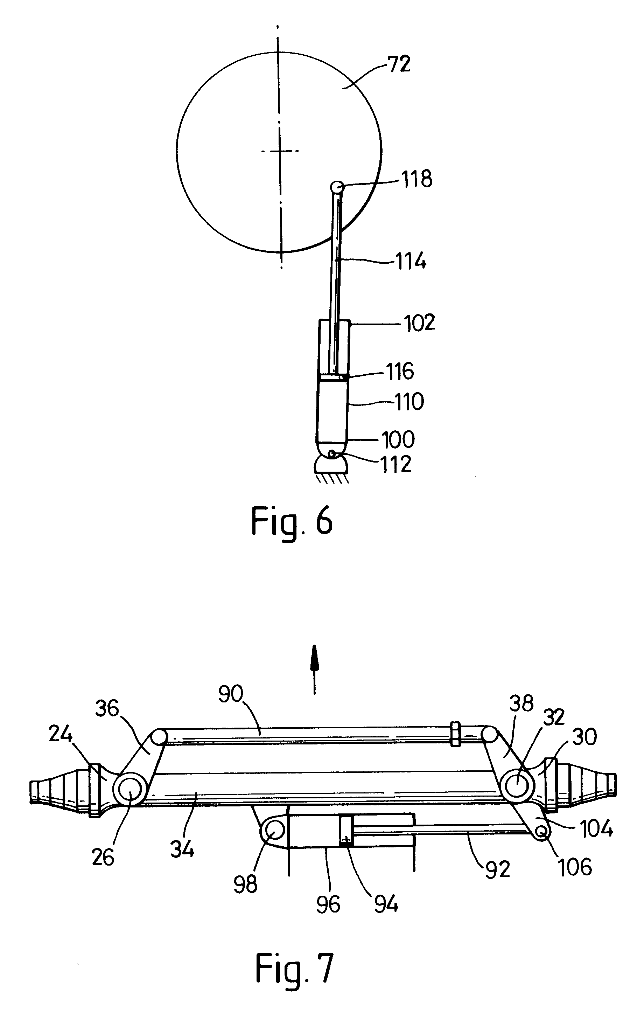

Rotation of the first and second stub axles 24,30 is induced by movement of a piston rod 92 of a piston 94 in a double acting cylinder 96 which is positioned rearward of the axle beam 34. A closed end of the cylinder is attached to the axle beam 34 by a pivotal connection 98. Hydraulic fluid passes in and out of the cylinder 96 via pipes 100,102 connected to suitable actuating means, such as that illustrated in Figure 6. The outer end of the piston rod 92 is pivotally connected to a further crank 104 secured perpendicularly to the second stub axle 30. In this arrangement, although a desired differential angle is produced between the first and second stub axles 24,30 upon extension or retraction of the piston rod 92, extension of the piston rod 92 of any given magnitude from the neutral position causes a change in angular displacement of the second stub axle 30 which is equal to the change in angular displacement caused by a retraction of the piston rod 92 of the same amount from the neutral position.

As previously discussed, a greater angular displacement is required when a wheel is at the inside of a curved path to be followed by a trailer than when the wheel is at the outside of an equivalent curved path. Compensation for this can be provided by the actuating means illustrated in Figure 6. Here a double acting hydraulic cylinder 110 is attached to the frame of the trailer, or a support fixed to the frame, by a pivotal connection 112. A piston rod 114 connected to a piston 116 operating in the cylinder 110 has a pivotal connection 118 at its outer end to the fifth wheel 72 of the tractor by which the trailer is towed. The pivotal connection 118 is offset in its neutral position with respect to an axis, passing through the rotational centre of the fifth wheel 72, which is perpendicular to an axis passing through the pivotal connection 118 and the pivotal connection 112 between the double acting cylinder 110 and the trailer frame. Rotation of the fifth wheel 72 relative to the trailer causing the trailer to follow a curved path causes extension or retraction of the piston rod 114, according to the direction of turning of the curved path, inducing hydraulic fluid to flow in and out of the cylinder 110 through pipes 100 and 102 connected in hydraulic circuit to the cylinder 96 of the steering system illustrated in Figure 5. In the arrangement of Figure 6, relative anticlockwise rotation of the fifth wheel 72 from its neutral position causes an extension of the piston rod 114 which is greater than the retraction of the piston rod from the neutral position caused by a clockwise rotation of the fifth wheel 72 of an equal magnitude from its neutral position. Consequently, when the actuating means of Figure 6 is connected to the steering system of Figure 5, an anticlockwise rotation of the fifth wheel 72 of, say, 15° from the neutral position will induce a clockwise rotation of the second stub axle 30 about its king pin 32 (this represents the inside wheel of the anticlockwise curved path to be followed), which is greater than the clockwise rotation of the second stub axle (when that axle is at the outside of a curved path to be followed) caused by an anticlockwise rotation of 15° of the fifth wheel 72 from its neutral position and vice-versa for a clockwise rotation of the fifth wheel 72.

Figure 7 shows a modification to the steering system of Figure 5 which renders the aforementioned compensation unnecessary. In this arrangement, the pivot 106 between the piston rod 92 and the further crank 104 is offset in its neutral position towards the outside of the trailer with respect to an axis perpendicular to the adjacent stub axle 30 passing through the associated king pin 106.

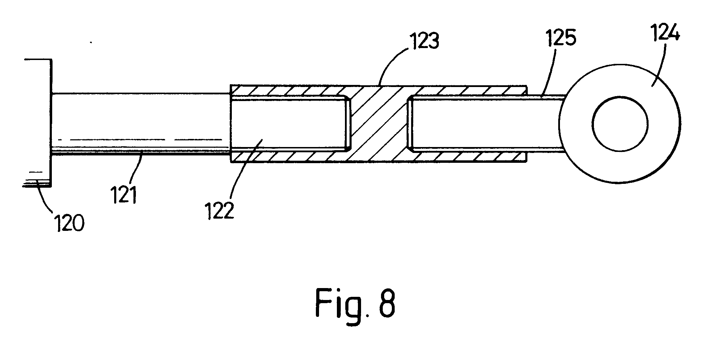

Figure 8 shows a further modification, in which an adjustable connector in the form of a sleeve 123 is provided between a piston rod and associated crank. In this arrangement, an hydraulic cylinder 120, of which one end is shown, has a piston rod 121 extending therefrom having a screw threaded end 122 which has, for example, a right hand thread. The sleeve 123 is internally threaded, having a right hand thread at one end and a left hand thread at the other end. As shown, the sleeve 123 is threaded onto the piston rod end 122 and an eye end 124 having a screw threaded shank 125 is threadedly engaged in the other end of the sleeve. The eye end is pivotally mounted on an end of a crank as described. Slots may be provided along the threaded portions of the sleeve 123 together with pinch bolts for locking the respective threads when correct adjustment has been made.

If a tailrod type jack is used, both ends may be provided with an adjustable connection, as has been described. The adjustable connection may be designed such that the adjustment range provided will accommodate fitment to a range of axles of different track widths, thereby providing for economical manufacture and minimising stocking levels. It will also accommodate adjustments to differing degrees of Ackerman correction.

It will be appreciated that the magnitude of changes in the angular orientation of the steering systems described is determined by the geometrical relationship between the component parts and the hydraulic ratios between the cylinders. A suitable geometry and hydraulic ratio can be chosen to achieve a desired characteristic.

## Claims

1. An active steering system for a vehicle in which an associated pair of wheels (6',8') which are aligned to be parallel to a longitudinal axis (10) of the vehicle for linear travel of the vehicle, are adapted to be angularly orientated when the vehicle travels a curved path so as to create a differential angle between the two wheels (6',8') about the centre of curvature (14) of said path, such that the wheel nearer to the centre of curvature, the inner wheel, is orientated at a larger angle to the direction of travel of the vehicle than the other, outer wheel.

2. An active steering system according to claim 1 in which the wheels (6',8') are angularly orientated by motive means in response to actuating means which are in turn adapted to be responsive to steering movements of the vehicle.

3. An active steering system according to claim 2 in which the motive means comprises at least one fluid operated piston and cylinder assembly (40,45,94,96) having at least one piston rod (50,52,92), the cylinder (40,46) being adapted for connection to the actuating means (60,110,116) and the piston rod (50,52,92) being connected to a mounting (24,30) for a wheel, such that the wheel is angularly orientated on movement of the piston (45,94) and piston rod (50,52,92) in response to the actuating means (60,110,116).

4. An active steering system according to claim 3 in which the or each piston and cylinder assembly (40,45,94,96) is adapted for mounting so that its longitudinal axis lies substantially transversely of the vehicle.

5. An active steering system (20) according to claim 3 or claim 4 in which the or each piston and cylinder assembly (40,45) includes a double acting cylinder (40) having first and second piston rods (46,48), the first piston rod (46) being connected to the mounting (24) for a first wheel, and the second piston rod (48) being connected to the mounting (30) for a second wheel.

6. An active steering system (20) according to claim 5 in which the cylinder (40) is adapted for pivotal connection to an axle beam (34) for the wheels.

7. An active steering system (20) according to claim 5 in which the cylinder (40) is adapted for pivotal connection to a frame of the vehicle.

8. An active steering (20) system according to claim 6 or claim 7 in which the pivotal connection (42) for the cylinder (40) is such to permit movement of the cylinder (40) longitudinally of the vehicle.

9. An active steering system according to claim 3 or claim 4 in which at least first and second piston and cylinder assemblies are provided, each assembly having one piston rod, the piston rod of the first assembly being connected to the mounting of a first wheel and the piston rod of the second assembly being connected to the mounting of a second wheel.

10. An active steering system according to claim 3 or claim 4 in which a single piston and cylinder assembly (94,96) is provided having a single piston rod (92) connected to the mounting (30) of a wheel, and a tie rod (90) is provided connected at one end to the mounting (24) of a first wheel and connected at an opposite end to the mounting (30) of a second wheel.

11. An active steering system according to any preceding claim in which the wheels have mountings provided by independent axle means.

12. An active steering system according to claim 11 in which each of the axle means comprises a stub axle (24,30), rotatable about the axis of an associated king pin (26,32).

13. An active steering system according to claim 12 in which a crank (36,38,104) is provided on at least one of the stub axles (24,30) such that rotation of the crank (36,38,104) causes rotation of the respective stub axle (24,30) about its associated king pin (26,32).

14. An active steering system according to claim 13 and any of claims 3 to 10 in which the or each piston rod (50,52,92) is pivotally connected to the or each crank (36,38,104), such that movement of the piston rod (50,52,92) causes rotation of the crank (36,38,104) which in turn causes rotation of the respective stub axle (24,30) thereby angularly orientating the respective wheel.

15. An active steering system according to claim 14 in which the or each pivotal connection (54,56,106) is offset with respect to a line perpendicular to the respective stub axle (24,30) passing through the respective king pin (26,32), such that retraction of the piston rod (50,52,92) causes a change in angular orientation of the wheel of different magnitude to a change caused by extension of the piston rod (50,52,92).

16. An active steering system according to claim 15 in which the or each pivotal connection (54,56,106) is offset towards the respective wheel, when the or each cylinder (40,96) is mounted for use rearwardly of the respective stub axle (24,30).

17. An active steering system according to claim 15 in which the or each pivotal connection (54,56,106) is offset towards the centre of the vehicle, when the or each cylinder (40,92) is mounted for use forwardly of the respective stub axle (24,30).

18. An active steering system according to any of claims 13 to 17 in which an adjustable connection is provided between the or each piston rod (50,52,92) and the or each crank (36,38,104).

19. An active steering system according to claim 18 in which the adjustable connection is of a turnbuckle type comprising a sleeve (123) having oppositely internally threaded ends, one of which is engaged by a screw-threaded end (122) on the piston rod (121), and the other of which is engaged by a screw threaded member (125) which is pivotally carried by the crank.

20. An active steering system according to claim 10 and claim 12 in which each of the stub axles (24,30) has a crank (36,38) fixedly secured to it and the tie rod (90) extends between and is pivotally connected to the cranks (36,35).

21. An active steering system according to claim 20 in which each pivotal connection is offset with respect to a line perpendicular to the respective stub axle (24,30) passing through the respective king pin (26,32), the offset being towards the respective wheel when the cranks (36,38) are arranged to project towards the rear of the vehicle.

22. An active steering system according to claim 20 in which each pivotal connection is offset with respect to a line perpendicular to the respective stub axle (24,30) passing through the respective king pin (26,32), the offset being towards the centre of the vehicle when the cranks (36,38) are arranged to project towards the front of the vehicle.

23. An active steering system according to any of claims 2 to 10, 14 to 22 or any of claims 11 to 13 as dependant from claim 2 in which the actuating means (60) comprises two fluid driving piston and cylinder assemblies (62,64) adapted to be pivotally mounted to the vehicle, each assembly (62,64) being connected to the motive means of at least one pair of wheels and having a piston rod (66,68) pivotally connected to a bell crank (70) adapted to rotate with a fifth wheel (72) by which the vehicle is towed, such that rotation of the bell crank (70) in response to the steering movement of the vehicle causes movement of the piston rods (66,68) thereby displacing fluid to the motive means.

24. An active steering system according to any of claims 2 to 10, 14 to 22 or any of claims 11 to 13 as dependant from claim 2 in which the actuating means comprises a single fluid driving piston and cylinder assembly (110,116) adapted to be pivotally mounted to the vehicle, the assembly (110,116) being connected at both sides of the piston (116) to the motive means and having a piston rod (114) adapted to be pivotally connected to a fifth wheel (72) by which the vehicle is towed, such that rotation of the fifth wheel (72) in response to the steering movement of the vehicle causes movement of the piston rod (114) thereby displacing fluid to the motive means.

25. An active steering system according to claim 24 in which the pivotal connection (118) between the piston rod (114) and the fifth wheel (72) is offset with respect to the centre of the wheel (72) such that anticlockwise and clockwise rotation of the wheel (72) causes unequal movements of the piston rod (114).

26. An active steering system according to any preceding claim in which more than one pair of wheels (6',8') is adapted to be angularly orientated.

27. A vehicle including an active steering system according to any preceding claim.

Fig.1

Fig. 3

Fig. 2

Fig. 4

Fig. 5

12

Fig. 6

Fig. 7

Fig. 8

European Patent Office

# EUROPEAN SEARCH REPORT

Application Number

EP 95 30 1602

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-22 63 506 (NOOTEBOOM ANTHONIE) 2 August 1973<br><br>* page 9, line 10 - page 13, line 5; figures * | 1-4, 10-15, 20,22, 23,25-27 | B62D13/04 |
| Y | | 18,19 | |
| X | CH-A-481 784 (BERGISCHE ACHSENFABRIK FR. KOTZ & SÖHNE) 30 November 1969<br><br>* column 4, line 17 - column 5, line 10 *<br>* column 5, line 28 - line 33 *<br>* figures 1-3,8 * | 1-3,9, 11-16, 20,21, 24,26,27 | |
| Y | | 4-8,18, 19 | |
| X | US-A-2 394 252 (E. C. MYERS) 5 February 1946<br>* page 1, left column, line 52 - right column, line 6 *<br>* page 2, right column, line 56 - page 3, left column, line 63 *<br>* figures 1,3,5-7 * | 1,27 | TECHNICAL FIELDS SEARCHED (Int.Cl.6)<br><br>B62D |
| Y | | 4-8 | |
| A | | 2,3 | |
| Y | US-A-3 043 601 (K. KOBER) 10 July 1962<br>* column 3, line 11 - line 21; figures 1,2,8,9 * | 18,19 | |

The present search report has been drawn up for all claims

| Place of search | Date of completion of the search | Examiner |
|---|---|---|
| THE HAGUE | 4 July 1995 | Kulozik, E |